# EUROPEAN PATENT APPLICATION

(11) **EP 4 537 967 A1**
(43) Date of publication of application: **16.04.2025**
(21) Application number: 23925471.7
(22) Date of filing: 22.03.2023
(51) Int. Cl.: B23K 11/04, B23K 35/30, B23K 11/34, B23K 101/00

(54) **FLASH BUTT WELDING MEMBER HAVING EXCELLENT FORMABILITY, AND PRODUCTION METHOD**

(30) Priority: 28.02.2023 KR 20230027165
(71) Applicant: POSCO Co., Ltd, Pohang-si, Gyeongsangbuk-do 37859 (KR)
(72) Inventor: BAE, Gyu-Yeol, Incheon 21985 (KR); HAN, Do-Kyeong, Incheon 21985 (KR)
(74) Representative: Meissner Bolte Partnerschaft mbB
(86) International application number: PCT/KR2023/003786
(87) International publication number: WO 2024/181605

(57) **Abstract**

Provided are a flash butt welding member with a welding part that is highly formable, and a welding method. The present invention relates to a welding member having excellent formability, and a production method. The welding member has a welding part that results from flash butt welding butt joints of a steel sheet using an electrode, and the average hardness difference is 50 or less in Vickers hardness between the coarse-grained and fine-grained heat-affected areas formed on any one side, left or right, of the welding line (welding interface) of the welding part.

## Description

### Technical Field

The present disclosure is to secure excellent processability of a joint portion obtained through flashbutt welding, and particularly relates to a flashbutt joint member that can secure sufficient toughness of the joint portion and a manufacturing method thereof.

### Background Art

In the automobile industry, research into lightweight technology for car bodies and parts is emerging as a major issue due to fuel efficiency regulations for environmental protection, such as global warming issues. Chassis and wheel parts, which are important to automobile driving performance, also need to use a high-strength steel material to reduce weight in line with this trend. In order to achieve the weight reduction of such parts, high strength of the material is essential, and in particular, when processing is performed after welding to manufacture parts, securing processability of the joint portion may be the most important factor.

Flashbutt welding, which is mainly used to manufacture automobile wheels, is a process in which joining is performed through melting scattering of a joint target surface and upset of a melted portion by a flash arc, and in the flashbutt welding, it is important to select optimal conditions to secure processability of the joint portion. In particular, in the case of high-strength steel, since the development of brittle structures due to hardening of the joint portion is a factor in reducing processability due to a relatively high carbon equivalent, it is necessary to develop process conditions that can control phase transformation of the joint portion. Since mass production is difficult when a rate of processing cracks in the joint portion after welding in an actual wheel manufacturing line, it is important to find a solution therefor. Meanwhile, in the case of a thick steel material with a thickness of 10 mm or more, used in manufacturing high-strength and lightweight wheels for commercial vehicles or large mining trucks, in addition to the brittleness of the joint portion described above, an optimal microstructure of the joint portion that can prevent softening of the joint portion and welding process control to implement the same are essential.

As an example of the prior art for resolving this problem, an invention described in Patent Document 1 may be provided. According to the patent document 1, an increase in an amount of upset in the joining operation was proposed for effective discharge of oxide inclusions formed at high temperatures during flashbutt welding. In addition, in Patent Document 2, an oil application apparatus for suppressing the formation of oxide inclusions during flashbutt welding of high-tensile steel was proposed. Meanwhile, in Patent Document 3, a method to improve toughness and processability of a wheel rim joint portion was proposed by appropriately introducing a pre-/upset-/post-heat pattern during flashbutt welding.

However, in the prior art, some solutions for controlling a microstructure of the flashbutt joint portion of the high-strength steel described above, were proposed, and in particular, a specific control method for a difference in hardness distribution between a coarse grain heat-affected zone and a fine grain heat-affected zone of the joint portion, which can optimally reduce deterioration of the toughness of the joint portion, a width of soft phase bands distributed between the coarse grain heat-affected zones formed on left and right sides of the joint portion, opposing each other, and a difference in hardness distribution between the coarse grain heat-affected zone and the soft phase bands, was not proposed, and there are limitations in that the prior art does not propose an additional solution for improving the processability of the joint portion during flashbutt welding manufacturing parts.

### [Prior art Document]

### [Patent Document]

(Patent Document 1) Republic of Korea Registered Patent No. 10-1281294
(Patent Document 2) Republic of Korea Registered Patent No. 10-0711459
(Patent Document 3) Republic of Korea Registered Patent No. 10-2178723

### Summary of Invention

### Technical Problem

An aspect of the present disclosure is to provide a flashbutt joint member and having excellent processability and a welding method by controlling an average hardness difference between a coarse grain heat-affected zone and a fine grain heat-affected zone forming a joint portion, as a method for controlling a phase transformation structure of the joint portion, when welding a high-strength hot-rolled steel material.

An object of the present disclosure is not limited to the above description. The object of the present disclosure will be understood from the entire content of the present specification, and a person skilled in the art to which the present disclosure pertains will understand an additional object of the present disclosure without difficulty.

### Solution to Problem

Therefore, according to an aspect of the present disclosure, a joint member having excellent processability is provided,
in a joint member having a joint portion obtained by flashbutt welding a butt joint portion of a steel sheet using an electrode,
the joint portion has a coarse heat-affected zone and a fine grain heat-affected zone respectively formed on left and right sides of the joint portion, opposing each other based on a joint line (joint interface), and
an average hardness difference between the coarse grain heat-affected zone and the fine grain heat-affected zone formed on any one of the left and right sides of the joint portion is within 50 in Vickers hardness.

The joint portion may have a soft phase band having an average width of within 100 µm distributed between the coarse grain heat-affected zones.

The joint portion may have an average hardness difference between the coarse grain heat-affected zone formed on any one of the left and right sides of the joint portion and the soft phase band of within 30 in Vickers hardness.

The joint portion may have an average effective grain size of the coarse grain heat-affected zone formed on any one of the left and right sides of the joint portion of 17 µm or less, and an average effective grain size of the fine grain heat-affected zone of 7 µm or less.

The steel sheet may include, by weight%: 0.04 to 0.18% of C, 2.0% or less (including 0%) of Si, 0.5 to 3.0% of Mn, 2.0% or less (including 0%) of Cr, 2.0% or less (including 0%) of Mo, 0.01 to 0.10% of Al, 0.05% or less (excluding 0%) of P, 0.05% or less (excluding 0%) of S, with a balance of Fe and other unavoidable impurities.

In addition, according to another aspect of the present disclosure, a flashbutt welding method having excellent processability of a joint portion is provided,
in the flashbutt welding method, during flashbutt welding a joint target surface of a butt joint portion of a steel sheet using an electrode, upset heating is performed, the joint target surface of the steel sheet is pre-heated, flash heated, and then a movement length between the electrodes during upset heating is controlled to be 5.0 mm or more and less than 15.0 mm to form a joint portion.

The joint portion has a coarse grain heat-affected zone and a fine grain heat-affected zone formed on left and right sides of the joint portion, opposing each other, based on a joint line (joint interface), and an average hardness difference between the coarse grain heat-affected zone and the fine grain heat-affected zone formed on any one of the left and right sides of the joint portion may be controlled to be within 50 in Vickers hardness.

The joint portion may have a soft phase band having an average width within 100 µm distributed between the coarse grain heat-affected zones.

The average hardness difference between the coarse grain heat-affected zone formed on any one of the left and right sides of the joint portion and the soft phase band may be within 30 in Vickers hardness.

The joint portion may have an average effective grain size of the coarse grain heat-affected zone formed on any one of the left and right sides of the joint portion of the joint portion of 17 µm or less, and an average effective grain size of the fine grain heat-affected zone of 7 µm or less.

### Advantageous Effects of Invention

As set forth above, according to the present disclosure having the above-described configuration, during flashbutt welding of a high-strength hot-rolled steel material having a tensile strength of 590 MPa or more, the toughness may be improved by reducing brittleness or softening of the joint portion through optimization of a microstructure of the joint portion, thereby effectively improving the strength and processability of a lightweight steel wheel joint portion of an automobile. Therefore, this technology can be used to expand the application of high-strength steel to lightweight steel wheels for commercial vehicles.

### Brief description of drawings

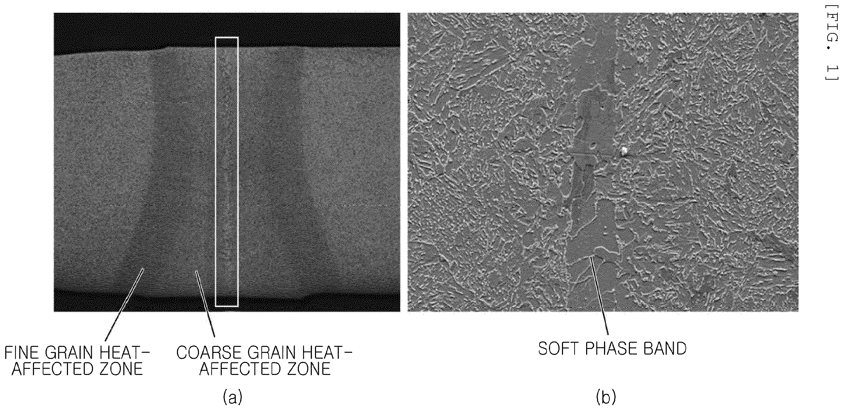

FIGS. 1(a-b) illustrate an optical photograph (a) of a cross-sectional structure of a flashbutt joint portion of Inventive Example 1 and an SEM photograph (b) obtained by magnifying an interface of the joint portion, in an embodiment of the present disclosure.

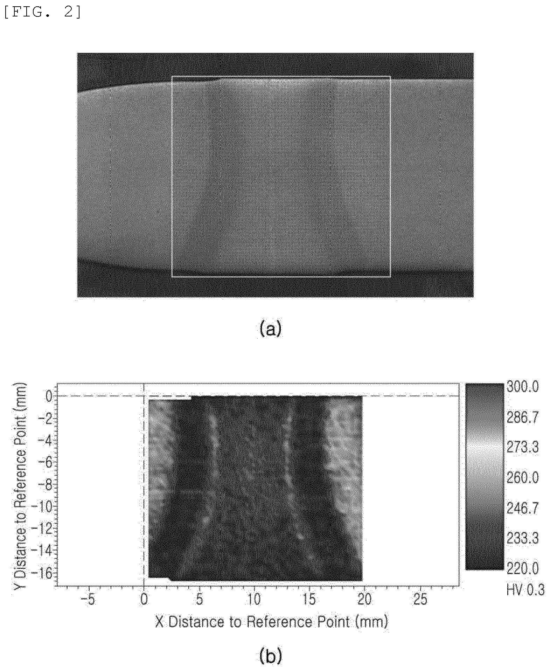

FIGS. 2(a-b) illustrate an optical photograph (a) of a cross-sectional structure of a flashbutt joint portion of Inventive Example 1 after measuring hardness of the flashbutt joint portion and an image (b) illustrating a hardness distribution corresponding to a square box area of the joint portion in color difference, in an embodiment of the present disclosure.

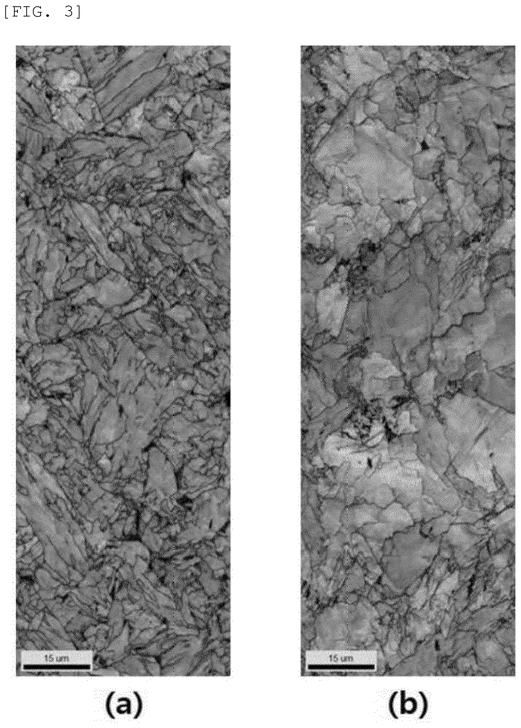

FIGS. 3(a-b) illustrate an Image Quality (IQ) photograph (a) of a coarse grain heat-affected zone of Inventive Example 1 observed by EBSD, and an Image Quality (IQ) photograph (b) of a coarse grain heat-affected zone of Comparative Example 1 observed by EBSD, in an embodiment of the present disclosure.

### Best Mode for Invention

Hereinafter, the present disclosure will be described.

In the present disclosure, during flashbutt welding, by introducing a pre-heating/flash/upset heating pattern, a sound joint portion may be formed, at the same time, by controlling a difference in average Vickers hardness between a coarse grain heat-affected zone and a fine grain heat-affected zone formed on left and right sides of the joint portion, opposing each other, to be within 50, an average hardness value of the coarse grain heat-affected zone of the joint portion, which may have inferior material properties, as compared to that of a base material, due to phase transformation in a situation in which tensile and bending stresses are applied to a joint member, is not excessive (embrittled) or is not insufficient (softened), as compared to that of the fine grain heat-affected zone, which has relatively good material properties, so that a technology that can improve the toughness and processibility of the joint portion may be provided.

Therefore, the present disclosure provides a joint member having excellent processability, and in a joint member having a joint portion obtained by flashbutt welding a butt joint portion of a steel sheet using an electrode, the joint portion includes a coarse grain heat-affected zone and a fine grain heat-affected zone respectively formed on left and right sides thereof, opposing each other, based on a joint line (joint interface), and an average hardness difference between the coarse grain heat-affected zone and the fine grain heat-affected zone formed on any one of the left and right sides of the joint portion is within 50 in Vickers hardness.

That is, the present disclosure provides a flashbutt welding method having processability of a joint portion, and in the flashbutt welding method, during flashbutt welding a joint target surface of a butt joint portion of a steel sheet using an electrode, upset heating is performed, the joint target surface of the steel sheet is pre-heated, flash heated, and then a movement length between the electrodes during upset heating is controlled to be 5.0 mm or more and less than 15.0 mm to form a joint portion.

As described above, the joint portion obtained by using a welding process can have improved toughness and processability of the joint portion. In this case, for pre-heating/pre-heating time/flash/flash(heating) length conditions, optimal conditions may be selected so that appropriate pre-heating and flash heating may occur at a level at which welding may be performed, considering the thickness of the steel sheet, and the movement length between the electrodes during upset heating may be controlled to 5.0 mm or more and less than 15.0 mm to obtain a joint portion with excellent processability. The present disclosure is not limited to specific process conditions in the above-described process. However, when a short-circuit current is 100%, it is preferable to apply a current in the range of 30 to 40% for pre-heating, 55 to 60% for flash heating, and 25 to 40% for upset heating. In addition, it is preferable to manage the pre-heating time in the range of 8.0 to 18.0 seconds and the flash (heating) length in the range of 5.0 to 10.0 mm, and it is preferable to set the upset pressure in the range of 50 to 70 bar.

Meanwhile, in the present disclosure, an alloy composition of the steel sheet is not particularly limited. However, as an example, the steel sheet may include by weight %: 0.04 to 0.18% of C, 2.0% or less (including 0%) of Si, 0.5 to 3.0% of Mn, 2.0% or less (including 0%) of Cr, 2.0% or less (including 0%) of Mo, 0.01 to 0.10% of Al, 0.05% or less (excluding 0%) of P, 0.05% or less (excluding 0%) of S, with a balance of Fe and other unavoidable impurities. In addition, the steel sheet may optionally further include at least one of 0.20% or less (including 0%) of Ti, 0.10% or less (including 0%) of Nb, and 0.10% or less (including 0%) of Cu. In addition, the steel sheet may have a thickness of 2.0 to 20.0 mm.

When the welding conditions described above are applied, through phase transformation control of the microstructure according to the appropriate heating and cooling rate of the joint portion during welding, a joint portion having a coarse grain heat-affected zone and a fine grain heat-affected zone respectively formed on the left and right sides thereof, opposing each other may be formed, and since the average hardness difference between the coarse grain heat-affected zone and the fine grain heat-affected zone formed on any one of the left and right sides of the joint portion may be controlled to be within 50 in Vickers hardness, it is possible to secure excellent processability through improved toughness of the joint portion.

In the present disclosure, by optimizing the flashbutt welding process and controlling an appropriate upset heating length, the discharge of a molten zone may be optimized, thereby preventing defects such as poor joining defects or formation of oxides inclusions in the joint portion, and by minimizing the grain growth of the coarse grain heat-affected zone generated through high-temperature heat history, and at the same time, by minimizing a difference in hardness with the fine grain heat-affected zone having relatively good material properties, cracks may be prevented from occurring in the joint portion during processing of parts. Meanwhile, in the present disclosure, the coarse grain heat-affected zone is a brittle heat-affected zone formed by being heated to 1200°C or higher, and the fine grain heat-affected zone is a heat-affected zone formed by being heated to 850 to 1000°C, and has excellent mechanical properties such as toughness due to the grains being refined by recrystallization.

Meanwhile, in the present disclosure the joint portion may include a soft phase band between the coarse grain heat-affected zones.

The soft phase band is a softened structure with relatively low hardness as compared to the heat-affected zone of the joint portion, and if the width of the soft phase band is too large, it may cause a decrease in the strength of the joint portion. According to an embodiment of the present disclosure, the soft phase band may have an average width of within 100 µm, and in this case, the toughness can be secured without a decrease in the strength of the joint portion, thereby improving the processability of the joint member. In other words, when the width of the soft phase band exceeds an average of 100 µm, when tensile and bending stresses are applied to the joint member, the stresses are concentrated in the soft phase distributed at an interface of the joint portion, which may deteriorate the toughness and processability of the joint portion.

The soft phase band is formed as hardenability-enhancing (austenite stabilization) alloying elements such as C, Mn and the like rapidly diffuse from a molten zone formed in the joint portion during the welding process and escape, and this is because, during the upset process, an upset heating length is insufficient and rapid cooling occurs without sufficient discharge of the molten zone, or, conversely, the upset heating length is excessive and the molten zone increases, so that a depletion layer region of the hardenability-enhancing alloying elements such as C and Mn described above expands, a band-shaped soft phase can develop and be distributed at the interface of the joint portion due to ferrite transformation.

In this case, when the width of the soft phase band exceeds an average of 100 µm, when tensile and bending stresses are applied to the joint member, the stresses are concentrated in the soft phase distributed at the interface of the joint portion, thereby reducing the toughness and processability of the joint portion.

In addition, in an embodiment, by controlling the average hardness difference between the coarse grain heat-affected zone and the soft phase band to within 30 in Vickers hardness, a joint member with excellent processability can be provided. This is because, as described above, when the soft phase band is relatively excessively softened compared to the material of the adjacent coarse grain heat-affected zone in a situation in which various stresses are applied to the joint member, processing cracks of the joint portion due to local stress concentration may be sensitive.

Furthermore, according to an embodiment of the present disclosure, an average effective grain size of the coarse grain heat-affected zone may be 17 µm or less, and an average effective grain size of the fine grain heat-affected zone may be 7 µm or less. By forming the average effective grain size of the coarse grain heat-affected zone and the average effective grain size of the fine grain heat-affected zone to a level, similar to the average effective grain size of 4 µm to 17 µm of the base material of the steel materials 1 to 2 of the present invention before welding, excellent processability of the joint portion can be secured. If the flashbutt welding upset heating length is insufficient compared to the appropriate level, the brittleness of the joint portion increases, and conversely, if the flashbutt welding upset heating length is excessive, the grain size of the heat-affected zone of the joint portion increases overall due to grain growth, which may be a factor in deteriorating the physical properties of the joint portion.

### Mode for Invention

Hereinafter, the present disclosure will be specifically described through the following Examples.

### (Example)

**[Table 1]**

| Base material No. | Alloy composition(Weight %) | | | | | | | | |
|---|---|---|---|---|---|---|---|---|---|
| | C | Si | Mn | P | S | Al | Ti | Nb | Remainder |
| 1 | 0.06 | 0. 15 | 1.6 | 0.010 | 0.001 | 0.034 | 0.06 | 0.03 | Fe |
| 2 | 0.07 | 0. 10 | 1.5 | 0. 009 | 0.002 | 0.040 | 0.07 | 0.04 | Fe |

Two types of base materials of a hot-rolled steel sheet having a steel material 1 having a tensile strength of 590 MPa/thickness of 18 mm/width of 280 mm and a steel material 2 having a tensile strength of 650 MPa/thickness of 11 mm/width of 250 mm were prepared as shown in Table 1 above. Thereafter, the base material was prepared to have a rim shape using a coiler, and then butt jointing was performed on surfaces thereof opposing each other, to perform flashbutt welding under the welding conditions shown in Table 2 below. In this case, for pre-heating/pre-heating time/flash/flash (heating) length conditions, optimal conditions were selected so that pre-heating and flash heating may occur at an appropriate level for welding, in consideration of the thickness of the steel material. Microstructure analysis, hardness measurement, and tensile and bending tests were performed on a joint portion forming each joint member obtained therethrough, and the results thereof were shown in Table 3 below. Meanwhile, in Tables 2 and 3 below, Inventive Examples 1 to 9 and Comparative Examples 1 to 8 illustrate welding conditions and analysis/evaluation results for the steel material 1 of Table 1, and Invention Examples 10 to 18 and Comparative Examples 9 to 22 illustrate welding conditions and analysis/evaluation results for the steel material 2 of Table 1.

In addition, in the case of the microstructural analysis, a cross-sectional structural specimen was collected for a joint portion forming each joint member, and then finely polished and etched with a nital solution, and then observed with an optical microscope. Meanwhile, an average hardness difference (ΔH1) between the coarse grain heat-affected zone and the fine grain heat-affected zone formed on any one of left and right sides of the joint portion, opposing each other, an average hardness difference (ΔH2) between soft phase bands distributed between the coarse grain heat-affected zone and the fine grain heat-affected zone formed on any one of the left and right sides of the joint portion, opposing each other, and a width Ws of the soft phase band, an average effective grain size G1 of the coarse grain heat-affected zone, and an average effective grain size G2 of the fine grain heat-affected zone were measured, and the results thereof are shown in Table 3 below.

In this case, as shown in FIG. 2, hardness measurement may be performed by measuring Vickers hardness at intervales of 0.2 mm under a load of 300 gf for each of the regions described above, so that a minimum of 1,500 and a maximum of 2,000 hardness values were obtained. In particular, in the case of the soft phase band distributed between the coarse grain heat-affected zones, after measuring a minimum of 50 and a maximum of 100 hardness values in a direction of the thickness of the base material, corresponding to the entire length of the joint portion at intervals of 0.2 mm under a load of 200 gf, an average hardness value for each thereof was calculated and used as the values of ΔH1 and ΔH2.

Meanwhile, regarding the width Ws of the soft phase band, an image of a soft phase band distributed continuously or discontinuously at an interface of the joint portion, was obtained by using a scanning electron microscope (SEM), and it was confirmed that a region in which hardenability-enhancing (austenite stabilization) alloying components such as C and Mn were depleted (whereby ferrite phase transformation mainly occurred), using energy-dispersive X-ray spectroscopy (EDS), and then the width of each soft phase band was measured to calculate an average width length value thereof.

In addition, as a method for measuring the average effective grain size G1 of the coarse grain heat-affected zone of the joint portion and the average effective grain size G2 of the fine grain heat-affected zone, Image Quality (IQ) and Inverse Pole Figure (IPF) Maps visualizing grain boundary and grain orientation information obtained by analyzing the Kikuchi pattern were obtained using Electron Backscattered Diffraction (EBSD). Thereafter, the grains were distinguished by referring the IQ and IPF maps of EBSD with the microstructure photographs observed with the optical microscope described above, and then each average effective grain size was measured by calculating the average grain size converted from the number of grains per unit area.

For each joint member having the joint portion obtained as described above, as shown in Table 3 below, a tensile test was performed to evaluate a position in which fracture occurred, and in addition, a three-point bending test (8R) was conducted to evaluate whether bending cracks occurred. In this case, for the tests described above, tensile specimens with a size of having a width of 50 mm and a length of 350 mm were prepared from a joint member corresponding to each welding condition, five tensile specimens each were evaluated at a tensile speed of 10 mm/min to verify reproductivity, and bending specimens with a size of 30 mm in width and 150 mm in length, and eight specimens each were evaluated each with a 90-degree bend to verify reproducibility. Thereafter, each specimen was observed with the naked eye and when a tensile fracture portion was a base material, it was evaluated as pass (o), when a tensile fracture portion was a joint portion, it was evaluated as fail (X), and in addition, when no bending cracks occurred, it was evaluated as pass (o), and when bending cracks occurred, it was evaluated as fail (X).

**[Table 2]**

| No. | Division | Pre-heating (%) | Pre-heating time (see) | Flash (%) | Flash length (mm) | Upset heat (%) | Upset heating length (mm) |
|---|---|---|---|---|---|---|---|
| 1 | Inventive example 1 | 40 | 18.0 | 55 | 5.0 | 30 | 10.0 |
| 2 | Inventive example 2 | 40 | 18.0 | 55 | 5.0 | 30 | 12.0 |
| 3 | Inventive example 3 | 40 | 18.0 | 55 | 5.0 | 35 | 8.0 |
| 4 | Inventive example 4 | 40 | 18.0 | 55 | 5.0 | 35 | 14.0 |
| 5 | Inventive example 5 | 40 | 18.0 | 60 | 5.0 | 35 | 14.0 |
| 6 | Inventive example 6 | 40 | 18.0 | 55 | 5.0 | 40 | 14.0 |
| 7 | Inventive example 7 | 35 | 18.0 | 55 | 5.0 | 35 | 14.0 |
| 8 | Inventive example 8 | 40 | 18.0 | 55 | 5.0 | 30 | 6.5 |
| 9 | Inventive example 9 | 40 | 18.0 | 55 | 5.0 | 30 | 5.0 |
| 10 | Inventive example 10 | 30 | 8.0 | 55 | 10.0 | 30 | 10.5 |
| 11 | Inventive example 11 | 30 | 8.0 | 55 | 10.0 | 30 | 12.0 |
| 12 | Inventive example 12 | 30 | 8.0 | 55 | 10.0 | 30 | 7.0 |
| 13 | Inventive example 13 | 30 | 8.0 | 55 | 10.0 | 25 | 14.0 |
| 14 | Inventive example 14 | 30 | 8.0 | 55 | 10.0 | 35 | 14.0 |
| 15 | Inventive example 15 | 40 | 8.0 | 55 | 10.0 | 30 | 14.0 |
| 16 | Inventive example 16 | 35 | 8.0 | 55 | 10.0 | 30 | 14.0 |
| 17 | Inventive example 17 | 30 | 8.0 | 55 | 10.0 | 30 | 14.0 |
| 18 | Inventive example 18 | 30 | 8.0 | 55 | 10.0 | 30 | 5.0 |
| 19 | Comparative example 1 | 45 | 18.0 | 55 | 3.0 | 30 | 17.0 |
| 20 | Comparative example 2 | 45 | 18.0 | 55 | 3.0 | 30 | 18.5 |
| 21 | Comparative example 3 | 50 | 20.0 | 55 | 3.0 | 30 | 17.0 |
| 22 | Comparative example 4 | 45 | 18.0 | 55 | 3.0 | 25 | 17.0 |
| 23 | Comparative example 5 | 45 | 18.0 | 55 | 5.0 | 25 | 15.0 |
| 24 | Comparative example 6 | 40 | 18.0 | 55 | 5.0 | 25 | 15.0 |
| 25 | Comparative example 7 | 30 | 18.0 | 55 | 5.0 | 30 | 4.0 |
| 26 | Comparative example 8 | 40 | 18.0 | 55 | 5.0 | 30 | 4.5 |
| 27 | Comparative example 9 | 30 | 8.0 | 55 | 10.0 | 30 | 15.0 |
| 28 | Comparative example 10 | 30 | 8.0 | 55 | 10.0 | 25 | 15.0 |
| 29 | Comparative example 11 | 30 | 8.0 | 55 | 10.0 | 27 | 15.0 |
| 30 | Comparative example 12 | 30 | 8.0 | 55 | 10.0 | 30 | 17.0 |
| 31 | Comparative example 13 | 35 | 8.0 | 55 | 10.0 | 30 | 17.0 |
| 32 | Comparative example 14 | 40 | 8.0 | 55 | 10.0 | 30 | 17.0 |
| 33 | Comparative example 15 | 30 | 8.0 | 60 | 10.0 | 25 | 15.0 |
| 34 | Comparative example 16 | 30 | 8.0 | 57 | 10.0 | 25 | 15.0 |
| 35 | Comparative example 17 | 30 | 9.0 | 55 | 10.0 | 25 | 15.0 |
| 36 | Comparative example 18 | 30 | 8.5 | 55 | 10.0 | 25 | 4.5 |
| 37 | Comparative example 19 | 37 | 8.0 | 55 | 10.0 | 30 | 15.0 |
| 38 | Comparative example 20 | 35 | 8.0 | 55 | 10.0 | 30 | 15. 5 |
| 39 | Comparative example 21 | 35 | 8.0 | 55 | 10.0 | 30 | 16.0 |
| 40 | Comparative example 22 | 30 | 8. 7 | 55 | 10.0 | 25 | 15.0 |

In Table 2 above, a current % for pre-heating/flash heating/upset heat is a ratio of short-circuit current.

**[Table 3]**

| No. | Division | Microstructure of joint portion | | | | | Physical properties of joint portion | |
|---|---|---|---|---|---|---|---|---|
| | | ΔH1 | ΔH2 | Ws ( µ m) | G1 ( µ m) | G2 (µm) | Tensile fracture | Bending cracks |
| 1 | Inventive example 1 | 25 | 13 | 47.2 | 16. 3 | 6.4 | 0 | 0 |
| 2 | Inventive example 2 | 32 | 17 | 64. 8 | 16. 5 | 6.8 | 0 | 0 |
| 3 | Inventive example 3 | 23 | - | 0.0 | 16.0 | 6. 1 | 0 | 0 |
| 4 | Inventive example 4 | 47 | 27 | 85. 7 | 16.8 | 6.9 | 0 | 0 |
| 5 | Inventive example 5 | 48 | 29 | 93. 5 | 17.0 | 7.0 | 0 | 0 |
| 6 | Inventive example 6 | 50 | 30 | 100. 0 | 17.0 | 7.0 | 0 | 0 |
| 7 | Inventive example 7 | 45 | 28 | 78. 5 | 16. 7 | 6.6 | 0 | 0 |
| 8 | Inventive example 8 | 18 | 8 | 35. 3 | 12.3 | 5. 5 | 0 | 0 |
| 9 | Inventive example 9 | 14 | 6 | 26. 4 | 10. 4 | 4.6 | 0 | 0 |
| 10 | Inventive example 10 | 27 | 15 | 53.4 | 16. 5 | 6.6 | 0 | 0 |
| 11 | Inventive example 11 | 33 | 17 | 59. 6 | 16.9 | 6.8 | 0 | 0 |
| 12 | Inventive example 12 | 24 | - | 0.0 | 15. 7 | 6.9 | 0 | 0 |
| 13 | Inventive example 13 | 48 | 27 | 96. 7 | 16.8 | 7.0 | 0 | 0 |
| 14 | Inventive example 14 | 49 | 28 | 99. 7 | 16.9 | 7.0 | 0 | 0 |
| 15 | Inventive example 15 | 50 | 30 | 100. 0 | 17.0 | 7.0 | 0 | 0 |
| 16 | Inventive example 16 | 49 | 29 | 99. 5 | 17.0 | 6.9 | 0 | 0 |
| 17 | Inventive example 17 | 48 | 27 | 98. 5 | 16. 7 | 6. 5 | 0 | 0 |
| 18 | Inventive example 18 | 12 | 5 | 24. 5 | 9.6 | 4.3 | 0 | 0 |
| 19 | Comparative example 1 | 62 | 34 | 125. 3 | 21. 4 | 9. 7 | X | X |
| 20 | Comparative example 2 | 68 | 37 | 132. 7 | 24. 8 | 11.2 | X | X |
| 21 | Comparative example 3 | 64 | 35 | 129. 4 | 23. 5 | 10. 5 | X | X |
| 22 | Comparative example 4 | 58 | 34 | 120. 6 | 18. 3 | 8.8 | X | X |
| 23 | Comparative example 5 | 54 | 33 | 117. 5 | 17.4 | 7.9 | 0 | X |
| 24 | Comparative example 6 | 52 | 31 | 115. 8 | 17. 2 | 7. 7 | 0 | X |
| 25 | Comparative example 7 | 53 | 32 | 113. 9 | 17. 1 | 7. 5 | 0 | X |
| 26 | Comparative example 8 | 55 | 33 | 118. 2 | 17. 9 | 8. 3 | X | X |
| 27 | Comparative example 9 | 56 | 34 | 115. 8 | 18. 4 | 8. 1 | X | X |
| 28 | Comparative example 10 | 54 | 31 | 113. 3 | 17. 8 | 7.8 | 0 | X |
| 29 | Comparative example 11 | 55 | 32 | 114. 5 | 18. 3 | 8.0 | X | X |
| 30 | Comparative example 12 | 58 | 33 | 117. 7 | 18. 5 | 8.9 | X | X |
| 31 | Comparative example 13 | 64 | 37 | 127. 6 | 24. 9 | 9. 5 | X | X |
| 32 | Comparative example 14 | 69 | 41 | 134. 5 | 27. 1 | 10.2 | X | X |
| 33 | Comparative example 15 | 56 | 35 | 125. 7 | 18. 5 | 8. 7 | X | X |
| 34 | Comparative example 16 | 54 | 34 | 124. 2 | 17.7 | 8.2 | 0 | X |
| 35 | Comparative example 17 | 58 | 37 | 124. 8 | 18.2 | 8. 5 | X | X |
| 36 | Comparative example 18 | 53 | 33 | 121. 3 | 17. 9 | 8. 3 | 0 | X |
| 37 | Comparative example 19 | 57 | 36 | 126. 6 | 18. 5 | 8.6 | X | X |
| 38 | Comparative example 20 | 56 | 35 | 125. 4 | 18.2 | 8.4 | X | X |
| 39 | Comparative example 21 | 65 | 39 | 132. 4 | 26. 5 | 10. 7 | X | X |
| 40 | Comparative example 22 | 62 | 37 | 128. 8 | 25. 4 | 9.9 | X | X |
| ΔH1:Average hardness difference between coarse grain heat-affected zone and fine grain heat-affected zone | | | | | | | | |
| ΔH2:Average hardness difference between coarse grain heat-affected zone and soft phase band | | | | | | | | |
| Ws:Width of soft phase band distributed between coarse grain heat-affected zones ( µ m) | | | | | | | | |
| G1:Average effective grain size of coarse grain heat-affected zone( µ m) | | | | | | | | |
| G2:Average effective grain size of fine grain heat-affected zone( µ m) | | | | | | | | |

In Table 3 above, '-' indicates no applicable items.

As shown in Tables 2 to 3 above, in the case of Inventive Examples 1 to 9 (steel material 1) and Inventive Examples 10 to 18 (steel material 2), in which an upset heating length of the joint portion obtained by flashbutt welding under various welding conditions by sequentially using pre-heating/flash/upset heating processes satisfies 5.0 mm or more and less than 15.0 mm, and ΔH1 satisfies a predetermined range, it can be seen that fracture occurred in a base material in the tensile test, and no bending cracks occurred in the bending test, in all Inventive Examples. It was discovered through research of the present disclosure that this is the result of controlling the average hardness difference between the coarse grain heat-affected zone with inferior material properties, as compared to the base material due to phase transformation and the fine grain heat-affected zone with relatively good material properties to within 50 in Vickers hardness in a situation in which tensile and bending stresses are applied to the joint member.

Meanwhile, as shown in Table 3, in the case of Inventive Example 3 (steel material 1) and Inventive Example 12 (steel material 2), it was sufficiently discharged before a molten portion was rapidly cooled by optimizing the upset heating length during flashbutt welding under the corresponding conditions shown in Table 2, so that a soft phase band was not formed in the joint portion. As a result thereof, it can be seen that no tensile fracture or bending cracks occurred in the joint portion.

In contrast thereto, in the case of Comparative Examples 1 to 8 (steel material 1) and Comparative Example 9 to 22 (steel material 2), in which the upset heating length of the joint portion, obtained under the above-described welding conditions was outside the range of 5.0 mm to 15.0 mm, and the value of ΔH1 was also outside a predetermined range, it can be seen that tensile fracture and/or bending cracks have occurred in the joint portion. As described above, in a situation in which tensile and bending stresses are applied to the joint member, when the average Vickers hardness value of the coarse grain heat-affected zone with inferior material properties, as compared to the base material due to phase transformation, is excessive (embrittled) or insufficient (softened) to exceed 50, as compared to the fine grain heat-affected zone with relatively good material properties, it is because the difference in toughness or strength between the coarse grain heat-affected zone and the fine grain heat-affected zone is increased, making the corresponding portion vulnerable.

FIGS. 1(a-b) illustrate an optical photograph (a) of a cross-sectional structure of a flashbutt joint portion of Inventive Example 1 and an SEM photograph (b) obtained by magnifying an interface of the joint portion, in an embodiment of the present disclosure.

Here, a coarse grain heat-affected zone and a fine grain heat-affected zone, formed on left and right sides of a joint portion, opposing each other, forming the joint portion of the joint member, and a soft phase band distributed between the coarse grain heat-affected zones, are illustrated. As described above, in Inventive Example 1, it can be confirmed that a sound joint portion is obtained without the occurrence of non-joining defects or oxide inclusion defects in the joint portion because the upset heating length is suitable.

FIGS. 2(a-b) illustrate an optical photograph (a) of a cross-sectional structure of a flashbutt joint portion of Inventive Example 1 after hardness measurement and an image (b) illustrating hardness distribution corresponding to a square box of the joint portion in color difference, in an embodiment of the present disclosure.

Here, it can be confirmed that, as described above, in Inventive Example 1, it can be confirmed that an upset heating length is suitable, so that an average Vickers hardness difference between the coarse grain heat-affected zone and the fine grain heat-affected zone formed on the left and right sides of the joint portion, opposing each other is within 50, and an average Vickers hardness difference between the coarse grain heat-affected zone and the soft phase band is within 30, which is good.

FIGS. 3(a-b) illustrate an IQ (Image Quality) photograph (a) of a coarse grain heat-affected zone of Inventive Example 1 observed by EBSD, and an IQ (Image Quality) photograph (b) of a coarse grain heat-affected zone of Comparative Example 1 observed by EBSD, in an embodiment of the present disclosure.

Here, as described above, in Inventive Example 1, the upset heating length is suitable, and it can be confirmed that the grains in the coarse grain heat-affected zone are relatively finer than those in Comparative Example 1.

While example embodiments have been illustrated and described above, it will be apparent to those skilled in the art that modifications and variations could be made without departing from the scope of the present disclosure as defined by the appended claims.

## Claims

1. A joint member having excellent processibility, in a joint member having a joint portion obtained by flashbutt welding a butt joint portion of a steel sheet,
wherein the joint portion includes a coarse grain heat-affected zone and a fine grain heat-affected zone respectively formed on left and right sides of the joint portion, opposing each other, based on a joint line (joint interface), and
an average hardness difference between the coarse grain heat-affected zone and the fine grain heat-affected zone formed on one of the left and right sides of the joint portion is within 50 in Vickers hardness.

2. The joint member having excellent processibility of claim 1, wherein the joint portion further includes a soft phase band having an average width of within 100 µm.

3. The joint member having excellent processibility of claim 2, wherein the soft phase band is formed between the coarse grain heat-affected zones.

4. The joint member having excellent processibility of claim 2, wherein the joint portion has an average hardness difference between the coarse grain heat-affected zone and the soft phase band of within 30 in Vickers hardness.

5. The joint member having excellent processibility of claim 1, wherein the joint portion has an average effect grain size of the coarse grain heat-affected zone of 17 µm or less, and an average effective grain size of the fine grain heat-affected zone of 7 µm or less.

6. The joint member having excellent processibility of claim 1, wherein the steel sheet includes by weight %:
0.04 to 0.18% of C, 2.0% or less (including 0%) of Si, 0.5 to 3.0% of Mn, 2.0% or less (including 0%) of Cr, 2.0% or less (including 0%) of Mo, 0.01 to 0.10% of Al, 0.05% or less (excluding 0%) of P, 0.05% or less (excluding 0%) of S, with a balance of Fe and other unavoidable impurities.

7. A flashbutt welding method having excellent processibility of a joint portion, in the flashbutt welding method, during flashbutt welding a joint target surface of a butt joint portion of a steel sheet using an electrode, upset heating is performed,
the joint target surface of the steel sheet is pre-heated, flash heated, and then a movement length between the electrodes during upset heating is controlled to be 5.0 mm or more and less than 15.0 mm to form a joint portion.

8. The flashbutt welding method having excellent processibility of a joint portion of claim 7, wherein the joint portion includes a coarse grain heat-affected zone and a fine grain heat-affected zone, respectively formed on left and right sides of the joint portion based on a joint line(joint interface), and
an average hardness difference between the coarse grain heat-affected zone and the fine grain heat-affected zone formed on any one of the left and right sides of the joint portion is within 50 in Vickers hardness.

9. A component having the joint portion described in any one of claims 1 to 6.
